# EUROPÄISCHE PATENTSCHRIFT

(11) **EP 1 245 852 B1**
(45) Veröffentlichungstag und Bekanntmachung des Hinweises auf die Patenterteilung: **13.09.2006**
(21) Anmeldenummer: 02002932.8
(22) Anmeldetag: 09.02.2002
(51) Int. Cl.: F16D 65/12

(54) **Fahrzeug-Bremsscheibe**
Vehicle disc brake
Frein à disque de véhicule

(30) Priorität: 20.03.2001 DE 10113541
(43) Veröffentlichungstag der Anmeldung: 02.10.2002
(73) Patentinhaber: Bayerische Motoren Werke Aktiengesellschaft, 80809 München (DE)
(72) Erfinder: Stimpel, Herbert, 82008 Unterhaching (DE); Heidenthaler, Martin, 83417 Kirchanschoering (DE)

(56) Entgegenhaltungen:
- DE-A- 19 929 391
- FR-A- 2 797 929
- GB-A- 2 093 936

## Beschreibung

Die Erfindung betrifft eine Fahrzeug-Bremsscheibe mit einem den Reibring tragenden Topf, wobei Reibring und Topf aus unterschiedlichen Materialien bestehen und geeignet miteinander verbunden sind, und wobei die Wand des Topfes zumindest im reibringnahen Bereich elastisch ausgebildet ist. Zum technischen Umfeld wird auf die DE 198 43 399 A1 verwiesen.

Bremsscheiben für PKW werden üblicherweise einstückig in Gussverfahren hergestellt, wobei die Form im wesentlichen durch den sogenannten Reibring, an welchem die Bremsbeläge angreifen und der die Reibleistung und die Drehmomentbelastung primär aufnimmt, und den sogenannten Topf, d.h. denjenigen Teil, der das Drehmoment vom Flansch des Fahrzeugrades zum Reibring überträgt und den Reibring axial und radial führt, bestimmt wird.

Wenn aus Leichtbaugründen der Topf aus einem anderen Material als der Reibring hergestellt wird, z.B. aus einem an den vorgefertigten Reibring in einem Verbundgussverfahren angegossenen Aluminium-Gussteil besteht, so wird zur Verhinderung eventueller Klappergeräusche vorzugsweise eine feste Verbindung zwischen diesen beiden Teilen der Bremsscheibe angestrebt. Dies wird bspw. durch zapfenförmige Verbindungen zwischen Reibring und Topf erreicht.

Da der Reibring bei dieser geschilderten Konstruktion sowohl radial wie auch axial relativ starr gefesselt ist, kann er sich bei Erwärmung durch die Bremsenergie nicht frei radial ausdehnen, sondern er muss den Topf radial mit aufdehnen und verformt sich aufgrund der daraus resultierenden Kräfte zu einer konischen, schirmartigen Form, weshalb dieser thermische Axialverzug auch "Schirmung" genannt wird. Hierdurch treten erhebliche radiale und tangentiale Zugspannungen im Bereich des Überganges zwischen Topf und Reibring auf, die die Bauteilfestigkeit beinträchtigen und zusätzliche, ungleichmäßig verteilte Verformungen erzeugen, so den sog. Reibring-Taumel und eine Reibring-Welligkeit.

Diese besagte Schirmung beeinflusst das Funktionsverhalten des Bremssattels negativ, da die axiale Verschiebung und Schiefstellung des Reibringes eine axiale Verschiebung der Bremsbeläge hervorruft. Nach Abklingen der thermischen Belastung formt sich der Reibring wieder annähernd zu seiner Ausgangsform zurück, wodurch ein vergrößertes Luftspiel zwischen den Bremsbelägen und dem Reibring entsteht; dieses erzwingt bei einer folgenden Bremsbetätigung eine erhöhte Volumenverschiebung in der Bremshydraulik zum erneuten Anpressen der Bremsbeläge an den Reibring und somit eine Beeinträchtigung des erwünschten, stabilen Bremspedalgefühles.

Die genannten ungleichmäßigen Verformungen, nämlich Taumel und Welligkeit, verschlechtern den Bremskomfort und können Bremsenrubbeln hervorrufen. Die genannten Zugspannungen verschlechtern die Belastbarkeit bzgl. Betriebsbeanspruchungen über längere Laufstrecken unter höheren thermisch-mechanischen Lasten, so dass in den Reibflächen und in den Übergangsbereichen zwischen Topf und Reibring sowie zwischen der Topf-Wand und der Radanlagefläche unter starker Beanspruchung Risse auftreten, was einfach nur durch größere Wandstärken verhindert werden kann, was jedoch unter Leichtbauaspekten unerwünscht ist.

Aus der eingangs genanten DE 198 43 399 A1 ist eine Bremsscheibe für Scheibenbremsen bekannt, bei der der Reibring und das dort sog. Tragteil, nämlich der Bremsscheiben-Topf, aus unterschiedlichen Materialien bestehen. Um dabei die unterschiedlichen Wärmedehnungen ohne ein Lösen des Reibrings vom Topf (bspw. durch Rissbildung) verarbeiten zu können, weist dort der Topf eine radial nachgiebige Wand auf. Dies ist dadurch realisiert, dass die Topf-Wand durch über dem Umfang verteilte und axial gerichtete biegeelastische Laschen gebildet ist, an denen der Reibring mittels Zapfen befestigt ist.

Eine weitere ähnliche Konstruktion an einer einstückigen Bremsscheibe zeigt die DE 31 07 124 A1. Diese beiden bekannten Ausführungsformen haben jedoch den Nachteil, dass der Bremsscheiben-Topf in einem besonders hoch belasteten Bereich, nämlich im Übergangsbereich zum Reibring, erheblich geschwächt ist. Insbesondere gilt dis für die Kraft- bzw. Momentenübertragung in Umfangsrichtung.

Eine Abhilfemaßnahme für diese geschilderte Problematik aufzuzeigen, ist Aufgabe der vorliegenden Erfindung.
Die Lösung dieser Aufgabe ist dadurch gekennzeichnet, dass die elastische Ausbildung der in Umfangsrichtung nicht unterbrochenen durchgängigen zylindrischen Topfwand durch in Umfangsrichtung aufeinanderfolgende Wandabschnitte mit unterschiedlicher Wandstärke realisiert ist. Dabei können die unterschiedlich starken Wandabschnitte durch entsprechende Gussgestaltung oder durch spanende Bearbeitung erzeugt sein.

Erfindungsgemäß werden die im bekannten Stand der Technik vorhandenen Lücken zwischen den sog. biegeelastischen Laschen des Bremsscheiben-Topfes bzw. der zylindrischen Topf-Wand vermieden, indem der Topf - entsprechend dem allgemein üblichen Stand der Technik - eine nicht unterbrochene durchgängige Zylinderwand aufweist. Erfindungsgemäß weist jedoch diese in Umfangsrichtung durchgängige Zylinderwand in Umfangsrichtung aufeinanderfolgende Abschnitte mit unterschiedlicher Wandstärke auf, so dass weiterhin eine ausreichende Elastizität in Radialrichtung gewährleistet ist. In Umfangsrichtung hingegen gewinnt der Topf durch die vorgeschlagenen Maßnahmen erheblich an Stabilität.

Hierdurch entstehen Gebilde ähnlich gleichmäßig am Umfang der axialen Zylinderfläche angeordneter Zungenfedern, die tangential (d.h. in Umfangsrichtung) hohe Schubspannungen und somit Drehmoment übertragen können, die axial eine einwandfreie Führung des Reibringes erlauben, aber dafür radial die Ausdehnung des Reibringes wenig behindern. Diese Formgestaltung kann dabei je nach Anwendung durch spanende Bearbeitung oder auch durch entsprechende Gussgestaltung erzeugt werden.

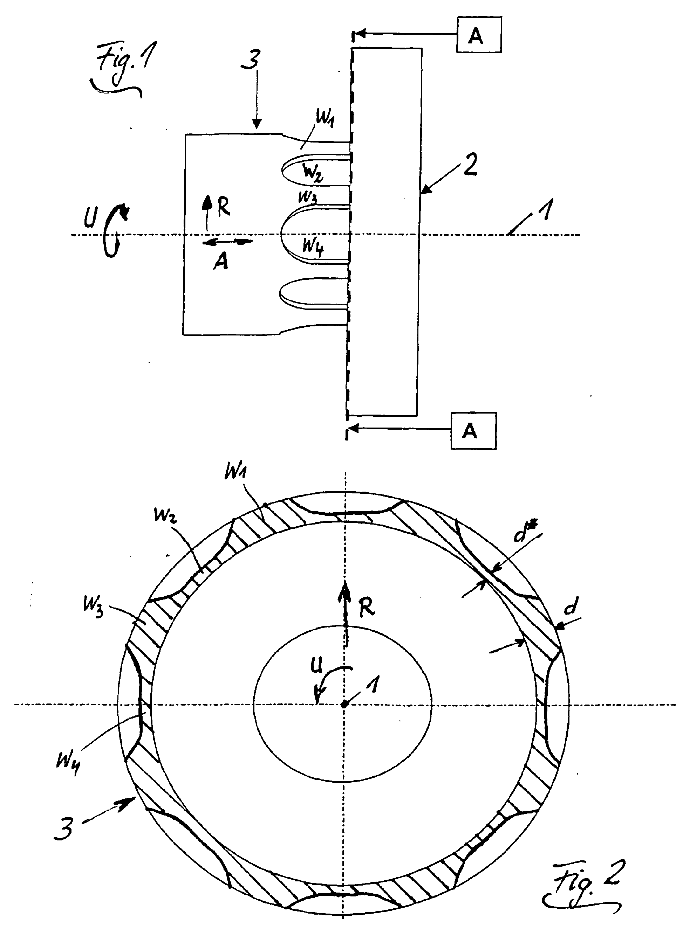

Im folgenden wird die Erfindung anhand eines bevorzugten, lediglich prinzipiell dargestellten Ausführungsbeispieles weiter erläutert, wobei die beigefügte **Figur 1** eine Seitenansicht einer erfindungsgemäßen Bremsscheibe zeigt, von der in **Figur 2** der Schnitt A-A aus Figur 1 dargestellt ist.

Mit der Bezugsziffer 1 ist die Rotationsachse einer Bremsscheibe einer Fahrzeug-Scheibenbremse bezeichnet, die - wie an sich üblich - aus einem Reibring 2 und einen Bremsscheiben-Topf 3 besteht. Diese beiden Elemente, die aus unterschiedlichen Materialien gefertigt sind, sind auf geeignete nicht dargestellte Weise miteinander verbunden.

Im reibringnahen Bereich ist die Wand des Topfes 3 dadurch in Radialrichtung R elastisch ausgebildet, dass in Umfangsrichtung U betrachtet aufeinanderfolgende Wandabschnitte W₁, W₂, W₃, W₄, usw. mit unterschiedlicher Wandstärke d bzw. d* ausgebildet sind. Die Wandabschnitte W₁, und W₃ usw. haben dabei die gleiche Wandstärke d wie der Topf 3 in seinem größten Bereich, während die dazwischenliegenden Wandabschnitte W₂, W₄, usw. eine demgegenüber verringerte Wandstärke d* aufweisen. Diese Wandabschnitte W₂, W₄, usw. mit verringerter Wandstärke d* erstrecken sich dabei in Axialrichtung A (parallel zur Rotationsachse 1) ausgehend vom Reibring 2 nahezu über die Hälfte des Topfes 3, wobei diese Wandabschnitte an ihrem dem Reibring 2 abgewandten Ende (nahezu in der Mitte des Topfes) annähernd halbkreisförmig abgerundet sind, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

Stets ergibt sich mit den vorgeschlagenen Maßnahmen eine geringere thermische Verformung des Reibringes und somit eine geringere Beeinträchtigung des Bremspedalweges, ferner geringere Taumel- und Welligkeitsprobleme im Reibring und somit ein geringeres thermisches Rubbeln. Geringere thermische Spannungen im Reibring und im Topf resultieren in geringeren Anforderungen bzgl. Festigkeit und Dimensionierung und dadurch geringeres Gewicht gegenüber einer herkömmlichen Verbundgusskonstruktion, wobei trotz der erzielten Elastizität in Radialrichtung R weiterhin eine hohe Stabilität und somit eine ausreichende Momentenübertragung in Umfangsrichtung U gewährleistet ist.

## Patentansprüche

1. Fahrzeug-Bremsscheibe mit einem den Reibring (2) tragenden Topf (3), wobei Reibring (2) und Topf (3) aus unterschiedlichen Materialien bestehen und geeignet miteinander verbunden sind, und wobei die Wand des Topfes zumindest im reibringnahen Bereich elastisch ausgebildet ist,
**dadurch gekennzeichnet, dass** die elastische Ausbildung der in Umfangsrichtung nicht unterbrochenen durchgängigen zylindrischen Topf-Wand durch in Umfangsrichtung aufeinanderfolgende Wandabschnitte (W₁, W₂, W₃, W₄,) mit unterschiedlicher Wandstärke (d, d*) realisiert ist.

2. Fahrzeug-Bremsscheibe nach Anspruch 1,
**dadurch gekennzeichnet, dass** die unterschiedlich starken Wandabschnitte (W₁, W₂, W₃, W₄,) durch entsprechende Gussgestaltung oder durch spanende Bearbeitung erzeugt sind.

## Claims

1. A vehicle brake disc comprising a container (3) holding the friction ring (2), wherein the friction ring (2) and container (3) are made of different materials and are suitably joined and wherein the container wall is made elastic at least in the region near the friction ring, **characterised in that** the elastic structure of the uninterrupted, continuous cylindrical container wall in the peripheral direction is obtained by differences in the wall thickness (d, d*) of successive peripheral wall portions (W₁, W₂, W₃, W₄).

2. A vehicle brake disc according to claim 1, **characterised in that** the wall portions (W₁, W₂, W₃, W₄) of differing thickness are made by suitable casting or by machining.

## Revendications

1. Disque de frein de véhicule avec un pot (3) portant l'anneau de friction (2), l'anneau de friction (2) et le pot (3) étant réalisés à partir de matériaux différents et reliés l'un à l'autre d'une manière appropriée, et la paroi du pot étant élastique au moins dans la zone proche de l'anneau de friction,
**caractérisé en ce que**
la configuration élastique de la paroi de pot cylindrique continue non interrompue dans la direction périphérique est réalisée par des segments de paroi (W₁, W₂, W₃, W₄) successifs dans la direction périphérique avec des épaisseurs de paroi (d, d*) différentes.

2. Disque de frein de véhicule selon la revendication 1,
**caractérisé en ce que**
les segments de paroi (W₁, W₂, W₃, W₄) d'une épaisseur différente sont fabriqués par un moulage approprié ou par un usinage par enlèvement de copeaux.
